# EUROPEAN PATENT SPECIFICATION

(11) **EP 1 392 579 B1**
(45) Date of publication and mention of the grant of the patent: **31.08.2005**
(21) Application number: 02724642.0
(22) Date of filing: 25.04.2002
(51) Int. Cl.: B65D 75/58, B32B 27/08

(54) **PACKAGING BAG WITH TEAR-OFF OPENING**
VERPACKUNGSBEUTEL MIT AUFREISSVERSCHLUSS
SAC D'EMBALLAGE A OUVERTURE DECHIRABLE

(30) Priority: 10.05.2001 JP 2001140543; 08.04.2002 JP 2002105714
(43) Date of publication of application: 03.03.2004
(73) Proprietor: Hosokawa Yoko Co., Ltd., Tokyo-to 102-0084 (JP)
(72) Inventor: OBARA, Sho, C/o Yugen Kaisha Obara Giken, Koshigaya-shi, Saitama 343-0826 (JP)
(74) Representative: Grünecker, Kinkeldey, Stockmair & Schwanhäusser Anwaltssozietät
(86) International application number: PCT/JP2002/004133
(87) International publication number: WO 2002/092459

(56) References cited:
- EP-A- 0 307 194
- EP-A- 0 875 369
- WO-A-01/19694
- DE-A- 19 940 592
- DE-U- 29 907 206
- US-A- 5 878 549
- US-A- 6 102 571

## Description

### Technical Field

The present invention relates a packaging bag, which has an oxygen-barrier property and can easily be torn open.

### Background Art

In the US-Patent US 6 102 571 a packaging bag is revealed. It comprises a tubular body obtained by joining opposite ends of a strip film comprising a lamination of oriented and non-oriented films to each other so as to form a longitudinal sealed portion. The tubular body has at opposite sides in its diametrical direction crease portions, respectively, and has at opposite edges in its longitudinal direction lateral sealed portions, respectively. The crease portion has the first tearable zone, which can be torn at longitudinal different positions. The longitudinal sealed portion is located on the back surface side of the bag and has the second tearable zone, which can be torn at longitudinal different positions. The second tearable zone has a length identical with or longer than that of the first tearable zone. The upper edge of the second tearable zone is located in the same level as or above the upper edge of the first tearable zone and the lower edge of the former is located in the same level as or below the lower edge of the latter. Apart from this subject, different subjects of the background art are known.

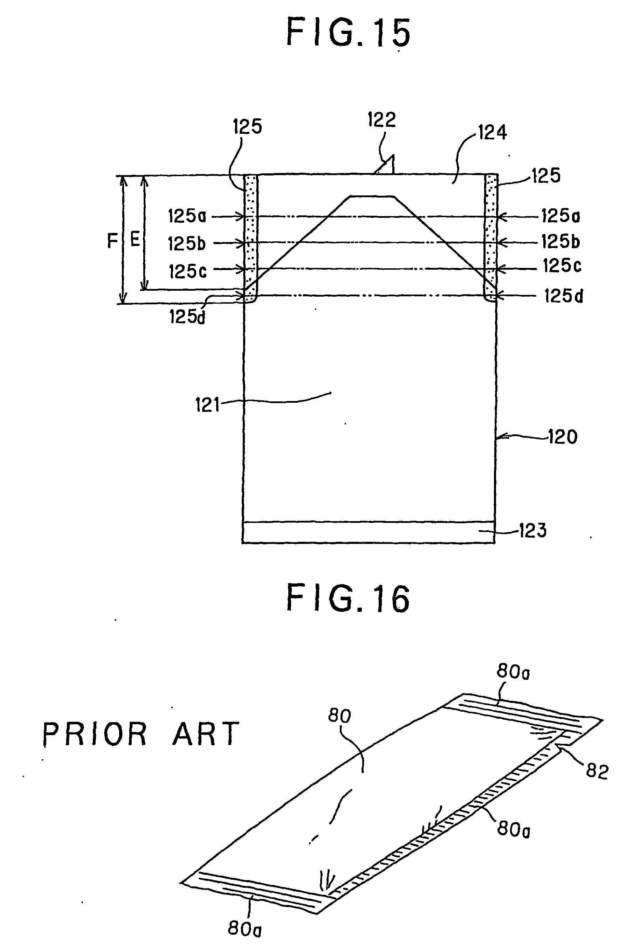

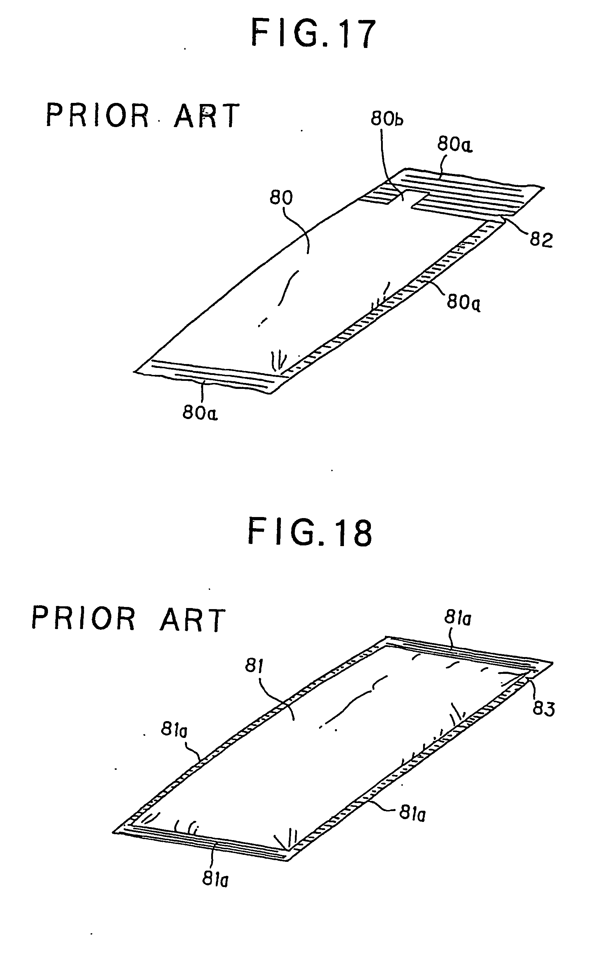

As a bag for receiving liquid relish such as soy sauce, mayonnaise and ketchup, or jelly type beverage, there is conventionally known a bag 80 having three side edges 80a, 80a, 80a heat-sealed as shown in FIG. 16. The bag 80 is formed of a plastic laminate film, which is provided with a layer having an oxygen-barrier property so as to serve as a basic layer of the film. A sheet of plastic laminate film having a rectangular shape is fold in two and then heat-sealed at three opened edges, thus preparing the bag. There is also known another type of bag, i. e., three side-sealed bag, which is obtained by folding a sheet of plastic laminate film in two to form a rectangular shape having a longitudinal opened edge and a pair of lateral opened edges, heat-sealing the longitudinal opened edge and one of the pair of lateral opened edges by a prescribed width to form normal heat-sealed portions 80a, 80a and heat-sealing the other of the pair of lateral opened edges by a longer width than the above-mentioned prescribed width to form the widened heat-sealed portion 80a having a spout portion 80b therein, as shown in FIG. 17. In addition, there is conventionally know further another type of bag 81, which is obtained by placing two sheets of plastic laminate film one upon another to form a rectangular shape having four edges 81 a, 81 a, 81 a, 81 a, and then heat-sealing the four edges, as shown in FIG. 18.

These liquid receiving bags 80,81 thus formed have portions 82,83 from which the bags can easily be torn open. Such portions 82,83 can be provided by forming a notch or a break intentionally.

In case where the bag has the three or four sides, which are heat-sealed with the prescribed width, formation of the notch as shown in FIG. 16 or 18, or formation of the spout portion 80b in the deformed sealed portion requires an increased area of the portions to be heat-sealed, thus leading an increased cost of material. The heat-sealed portion has a relatively high hardness. Accordingly, in case where a user brings his or her mouth into direct contact with an opening, which is provided by tearing the bag containing a jelly-like beverage, when drinking it, contact of his or her mouth with the edge of the heat-sealed portion of the bag to suck the beverage may cause damage to the mouth. In addition, the three side-sealed bag has the bent edge portion on one side thereof and the heat-sealed portion 80a on the other side thereof. When the above-mentioned heat-sealed portion 80a is provided by heat-sealing only the one side of a bag body while applying pressure to entirety of the bag body utilizing a single pressing device, a uniform sealing pressure may not be maintained in the entirety of the one side of the bag body. As a result, a portion having insufficient sealing property may exist in the heat-sealed portion thus obtained, leading to leakage of the contents in the bag. In addition, if a user can select the size of the opening, which is provided by tearing the bag, it is possible to control the flow rate of the contents in the bag in accordance with a kind and viscosity of the contents in the bag. The size of such an opening of the conventional bag cannot be selected by a user, thus providing no technical effects mentioned above.

There is a limit in strength of the laminate film of which the bag body for the bag is formed, even when attempt is made to increase the strength. A sharp-edged article may easily pierce into the bag body formed of such a laminate film with the result that the bag is opened unintentionally.

### Disclosure of the Invention

An object of the present invention, which is made to solve the above-mentioned problems, is therefore to provide a packaging bag, which permits prevention of the unintentional opening of the bag, can be torn open with an appropriate size of the opening in accordance with a kind of contents in the bag, minimize deterioration of strength of the bag, while maintaining a high oxygen-barrier property due to fine concavities opening outwardly formed on the bag so as not to pass therethrough, and reduce cost of material.

In order to attain the aforementioned object, a packaging bag of the first aspect of the present invention comprises all the features of claim 1.

In this aspect of the present invention, the at least one of the first heat sealed portion and the second heat sealed portion may have a width, which varies from one of the pair of opposite side edge portions toward the other thereof.

In the second aspect of the present invention, the above-mentioned width may gradually decrease from the one of the pair of opposite side edge portions toward the other thereof.

In a case where the packaging bag receives fluid therein, the viscosity of the fluid depends on the kind thereof. Even when the opening of the packaging bag, which receives fluid having a low viscosity such as soy sauce therein, is relatively small, it is possible to pour out the fluid smoothly. On the contrary, when the opening of the packaging bag, which receives fluid having a high viscosity such as ketchup therein, is relatively small, it is difficult to pour out the fluid smoothly. In such a case, it is preferable to form the opening having the larger diameter. When there are manufactured many kinds of packaging bags having the different opening size in accordance with the contents in the packaging bag in view of the above-mentioned problem, production control and control of products in stock become complicated, thus causing unfavorable problems.

The packaging bag of the present invention also solves the above-mentioned problem so that the packaging bag having a certain size and shape can cope with requirements for the contents having the different viscosities and the opening size.

More specifically, in the present invention, the first and/or second heat sealed portion has a width, which gradually decreases from the opposite side edge portions toward the central position between them, or the first and/or second heat sealed portion has a width which gradually decreases from the one of the opposite side edge portions to the other thereof. As a result, selection of the portion to be torn in the first and/or second heat sealed portion may change the size of the opening from which the contents is poured.

In the third aspect of the present invention, the tear-starting portion may be provided on one of the pair of opposite side edge portions so as to extend over an entirety of the width having the maximum value. According such a feature, the range of the tear-starting portion may be extended, thus providing an effect that the packaging bag can easily be torn open with fingers.

In the fourth aspect of the present invention, the plastic laminate film may comprise an oriented plastic film layer serving as an outer layer and a non-oriented plastic resin layer serving as an inner layer; and the tear-starting portion may be formed on the oriented plastic film layer.

According to the feature of the fifth aspect of the present invention, the tear-starting portion is formed in the oriented plastic film layer to provide therein the fine concavities opening outwardly. The effect that the packaging bag can easily be torn open with fingers is ensured, without dripping.

In this aspect of the present invention, the oriented plastic film layer may be coated at its inner side with a polyvinylidene chloride film layer.

According to the feature of this aspect of the present invention, a good oxygen barrier property can be ensured. The oriented plastic film layer serving as the outer layer and the non-oriented plastic resin layer serving as the inner layer protect the polyvinylidene chloride film layer serving as the intermediate layer between them, thus providing the good oxygen barrier property for a long period of time.

In the sixth aspect of the present invention, the oriented plastic film layer may be coated at its inner side with a vapor-deposited metallic layer.

According to the feature of this aspect of the present invention, formation of the vapor-deposited metallic layer for example formed of aluminum oxide provide the excellent oxygen-barrier property, even when the plastic laminate film does not include any aluminum foil layer. The vapor-deposited metallic layer is formed as the intermediate layer so as to prevent damage thereto, thus providing the excellent oxygen-barrier property for a long period of time.

In the seventh aspect of the present invention, each of the first and second heat sealed portions may have a flat edge.

In general, the packaging bags filled with contents are often placed one upon another in a carton. Formation of irregularities on the upper and lower edges of the packaging bag may damage the other packaging bag, leading to a possible leakage of the contents received in the packaging bag. In order to prevent such a problem, it is conceivable to increase the thickness of the plastic laminate film. Such measures cause the increased cost.

According to the above-mentioned feature of this aspect of the present invention, each of the first and second heat sealed portions has the flat edge without irregularities so as to prevent the other packaging bag from being damaged through contact of the packaging bags with each other. As a result, it is possible to surely prevent the packaging bag from being pierced or torn unintentionally.

### Brief Description of the Drawings

FIG. 1 is a perspective view illustrating a packaging bag according to the prior art;
FIG. 2 is a partial perspective view of the packaging bag as shown in FIG. 1, illustrating a tear-starting portion formed on a rear heat sealed portion;
FIG. 3 is a front view illustrating a state in which the upper portion of the packaging bag as shown in FIG. 1 is torn open;
FIG. 4(a) is a cross sectional view of a plastic laminate film of which the packaging bag is formed, and FIG. 4(b) is a cross sectional view of the plastic laminate film having fine concavities;
FIG. 5 is a schematic descriptive view illustrating an apparatus for manufacturing the plastic laminate film;
FIG. 6 is a perspective view illustrating a device, which is included in the apparatus as shown in FIG. 5, to form the tear-starting portion on a PET film;
FIG. 7 is a view illustrating a step for slitting the plastic laminate film in the longitudinal direction;
FIG. 8 is a view illustrating a step for forming the sheet of the plastic laminate film, which has been cut in the longitudinal direction, into a tubular body;
FIG. 9 is a view illustrating a step for heat-sealing the tubular body in the longitudinal direction and the perpendicular direction thereto in accordance with the size of the packaging bag to be manufactured;
FIG. 10 is a view illustrating a step for cutting the tubular body, which has been subjected to the heat-sealing step, into a pair of jointed bag bodies;
FIG. 11 is an enlarged view of a portion "A" in FIG. 10;
FIG. 12 is a view illustrating a cutter having a zigzag blade and a cut shape of the pair of jointed bag bodies;
FIG. 13 is a front view illustrating the packaging bag of the first embodiment of the present invention, in which the size of an opening provided by tearing the bag can be selected;
FIG. 14 is a front view illustrating the packaging bag of the second embodiment of the present invention;
FIG. 15 is a front view illustrating the packaging bag of the third embodiment of the present invention;
FIG. 16 is a perspective view illustrating the conventional three-side sealed bag;
FIG. 17 is a perspective view illustrating another conventional three-side sealed bag having the specific shape of the heat-sealed portion to form a spout portion; and
FIG. 18 is a perspective view illustrating the conventional four-side sealed bag.

### Best Mode for Carrying Out the Invention

Now, embodiments of a packaging bag of the present invention will be described in detail below with reference to the accompanying drawings.

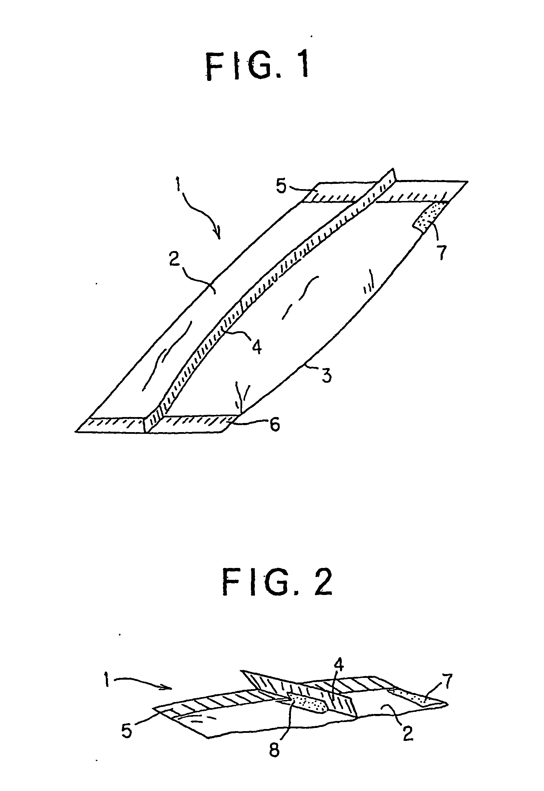

FIG. 1 shows a packaging bag 1. The packaging bag 1 is obtained by (i) bringing the pair of opposite side edges of a single sheet of plastic laminate film into contact with each other by a prescribed width, (ii) heat-sealing these side edges together over their entirety to form a tubular shaped body having a heat sealed portion 4, (iii) collapsing the tubular shaped body into a flatten shaped body having a front face 3, a rear face 2 opposing the front face 3, a pair of opposite side edge portions connecting the front face and the rear face to each other, the first opened portion and the second opened portion opposing the first opened portion, and (iv) heat-sealing the first and second opened portions to form the first and second heat sealed portions 5 and 6, respectively. The above-mentioned heat sealed portion 4, which is placed in the center of on the rear face 2 so as to stand outward and extend in the longitudinal direction of the packaging bag 1 is hereinafter referred to as the "rear heat sealed portion".

Each of the first heat sealed portion 5 and the second heat sealed portion of the packaging bag 1 is provided with the flat edge, which has neither zigzag cut edge nor irregularities, as shown in FIG. 1. The packaging bags 1 filled with the contents are often kept in a container such as a carton so as to be placed one upon another therein. In such a case, the flat edge of the first and second heat sealed portions 5, 6 of the packaging bag 1 prevents damage to the other packaging bag.

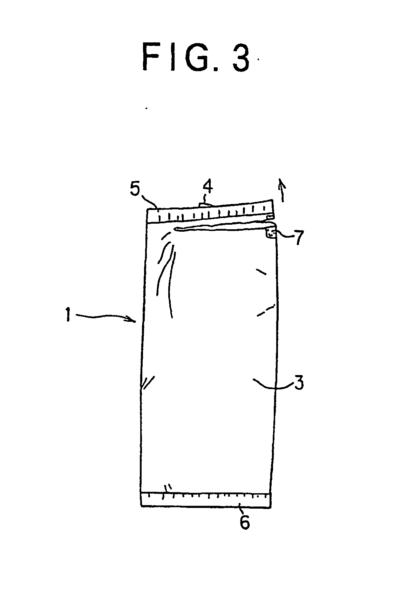

One of the opposite side edge portions of the packaging bag 1 is provided in the vicinity of the first heat sealed portion 5 with a rough surface portion 7 serving as the tear-starting portion. The rough surface portion 7 is formed in order to facilitate the tearing of the upper portion of the packaging bag 1 so that the upper portion thereof can easily be torn from the tear-starting point of the rough surface portion 7 when opening the packaging bag 1. As shown in FIG. 2, the rear heat sealed portion 4 is provided in the vicinity of the first heat sealed portion 5 with the other rough surface portion 8. The rough surface portion 8 is formed on the root end side of the rear heat sealed portion 4 so as to extend to the prescribed portion of the rear face 2. The rough surface portion 8 prevents the tearing operation from being stopped by the rear heat sealed portion 4. Accordingly, the rough surface portion 8 is formed on the opposite surface of the rear heat sealed portion 4 to the rough surface portion 7 serving as the tear-starting portion. The rough surface portions 7 and 8 are provided by forming a plurality of fine concavities on the plastic laminate film of which the packaging bag 1 is formed. The packaging bag 1 can easily be torn open by tearing (i) the rough surface portion 7 serving as the tear-starting portion, (ii) the opposing portions of the rear face 2 and the front face 3, (iii) the rear heat sealed portion 4 having the rough surface portion 8 and (iv) the other opposing portions of the rear face 2 and the front face 3 (see FIG. 3) in this order. The packaging bag 1 may be torn open by tearing first the rough surface portion 8 formed on the rear heat sealed portion 4. In this case, the rough surface portion 8 serves as the tear-starting portion.

The fine concavities formed on the rough surface portions 7, 8 are illustrated in FIGS. 1 and 2 in an exaggerated state in order to facilitate the understanding. In fact, such rough surface portions 7, 8 are substantially invisible to the naked eyes so as not to deteriorate the external appearance of the packaging bag 1. In the above-described embodiment, the upper surface of the side edge of the plastic laminate film is brought into contact with the upper surface of the other side edge thereof to form the rear heat sealed portion 4. However, the upper surface of the side edge of the plastic laminate film may be brought into contact with the lower surface of the other side edge thereof to form the rear heat sealed portion 4.

The plastic laminate film of which the packaging bag 1 is formed is obtained by placing a plurality of plastic films one upon another. What is received in the packaging bag 1 is for example liquid having a low viscosity such as soy sauce or liquid having fluidity and a high such as ordinary sauce, mayonnaise, ketchup, soybean paste and the other sauce, which are easily to be oxidized by oxygen in the air. It is therefore preferable that the packaging bag 1 has a good oxygen-barrier property and moistureproof property. If the packaging bag includes no aluminum foil layer as described later, it is possible to make the packaging bag transparent so as to permit a visual recognition of the state of the contents.

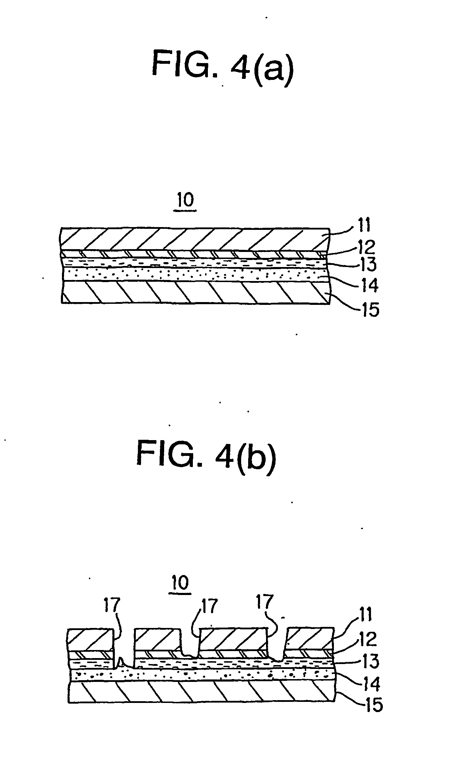

FIG. 4(a) shows an example of a layer structure of the plastic laminate film 10. A PET (polyethylene terephthalate) film layer 11 serving as the base layer of the plastic laminate film, which is placed on the outer side of the packaging bag 1, is combined with a PE (polyethylene) film layer 15, which is placed on the inner side thereof, through adhesive 14. The PET film layer 11 serving as the outer layer is provided on its inner surface with a PVDC (polyvinylidene chloride) coating layer 12 to impart the oxygen-barrier property to the plastic laminate film 10. The PVDC coating layer 12 is provided on its inner surface with a printing layer 13 on which characters and patterns for the packaging bag 1 appears. The adhesive 14 connecting the PET film layer 11 with the PE film layer 15 exists between the printing layer 13 and the PE film layer 15.

A biaxial oriented film having a thickness of 12 µm is utilized to form the PET film layer 11 serving as the outer layer. The PET film layer 11 is coated on its inner side with the PVDC film layer having a thickness of about 3 µm. The PE film having a thickness of 70 µm is utilized to form the PE film layer 15 serving as the inner layer. A dry-laminate adhesive or a solventless adhesive is used as the adhesive 14 for connecting the outer and inner layers.

In FIG. 4(a), the PET film layer 11 is provided on the inner side with the PVDC coating layer 12. A vapor deposited layer may be substituted for the above-mentioned PVDC coating layer 12 to provide an excellent barrier property. Such a vapor deposited layer is formed by depositing the inner surface of the PET film layer 11 with metal such as A□₂O₃ and SiO₂.

FIG. 4(b) is an enlarged cross-sectional view of the plastic laminate film having the rough surface portion 7 serving as the tear-starting portion. The rough surface portion 7 is formed by pressing the outer surface of the plastic films with a sandpaper #80 to #180 prior to the lamination process. The fine concavities 17 are formed in the layers above the PE film layer 15 so as not to reach at least the PE film layer 15.

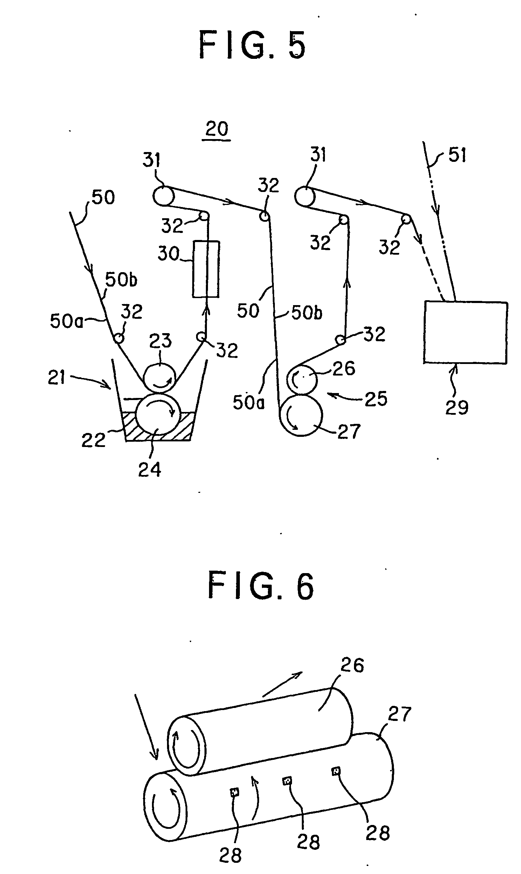

FIG. 5 illustrates an apparatus 20 for forming the plastic laminate film of which the packaging bag is formed. The plastic laminate film forming apparatus 20 is composed of a printing device 21, a rough surface forming device 25 and a lamination device 29. The printing device 21 is used to apply a printing step to a single surface 50a of the strip-shaped PET film 50 serving as the base layer. The rough surface forming device 25 forms the rough surface portion on the opposite surface 50b to the printed surface 50a. The lamination device 29 combines the strip-shaped PET film 50 with the strip-shaped PE film 51 serving as the inner layer into the laminate film. The printing step, the rough surface forming step and the lamination step are applied to the strip-shaped PET film 50, while traveling the PET film 50 in the longitudinal direction.

The printing step is first applied to the single surface 50a of the strip-shaped PET film 50, which has been fed from the left hand side in FIG. 5, utilizing the printing device 21. As a result, characters or patterns are printed on the single surface 50a of the PET film 50. AS the printing device 21, there is used a gravure printing device in which the PET film 50 travels between a lower roller 24, which is immersed into ink received in a tank 22, and a blanket roller 23, which is placed above the lower roller 24 so as to carry out the printing step.

The strip-shaped PET film 50 having the one surface to which the printing steps has been applied, is conveyed through a drying device 30 to the rough surface forming device 25, while being guided by means of guide rollers 31, 32. The rough surface forming device 25 is composed of a rubber roller 26, which is placed on the upper side and a rough surface forming roller 27, which is placed on the lower side so as to come into contact with the rubber roller 26. The rough surface forming roller 27 is provided on its peripheral surface with three pieces of sandpaper 28 having a rectangular shape. The three pieces of sandpaper 28 are placed in the longitudinal direction of the rough surface forming roller 27 at prescribed intervals.

The strip-shaped PET film 50 conveyed to the rough surface forming device 25 is wound around the rough surface forming roller 27 from the lower side thereof so that the opposite surface 50b to the printed surface 50a comes into contact with the peripheral surface of the rough surface forming roller 27. The strip-shaped PET film 50 is guided along the peripheral surface of the rough surface forming roller 27 in the counterclockwise direction in FIG. 5 and then held between the rough surface forming roller 27 and the rubber roller 26. When the rough surface forming roller 27 rotates so that the pieces of sandpaper 28 provided on the roller 27 reach the uppermost position, the strip-shaped PET film 50 is held between the pieces of sandpaper 28 and the periphery of the rubber roller 26 to form the rough surface portions on the surface 50b. As a result, the rough surface portions are formed on the surface 50b of the strip-shaped PET film 50 in the prescribed lateral positions so as to be placed at prescribed intervals in the longitudinal direction of the film 50.

It is preferable to use as the piece of sandpaper attached on the rough surface forming roller a piece of sandpaper #100 to #120 in which molten aluminum is dispersed. There may be used another piece of sandpaper with fine projections of dispersed material such as silicon carbide, boron carbide, emery powder or sand other than molten aluminum. A member for forming the rough surface portion is not limited only to the piece of sandpaper, but may be a metallic plate having a plurality of projections, which is to be attached on the peripheral surface of the rough surface forming roller 27.

After the rough surface portions are formed on the surface 50b of the strip-shaped PET film 50, the film 50 is conveyed to the lamination device 29, while being guided by means of guide rollers 31, 32. The thus conveyed strip-shaped PET film 50 is placed at its printed surface 50a on the strip-shaped PE film 51 conveyed through a different rout to form the single strip-shaped plastic laminate film.

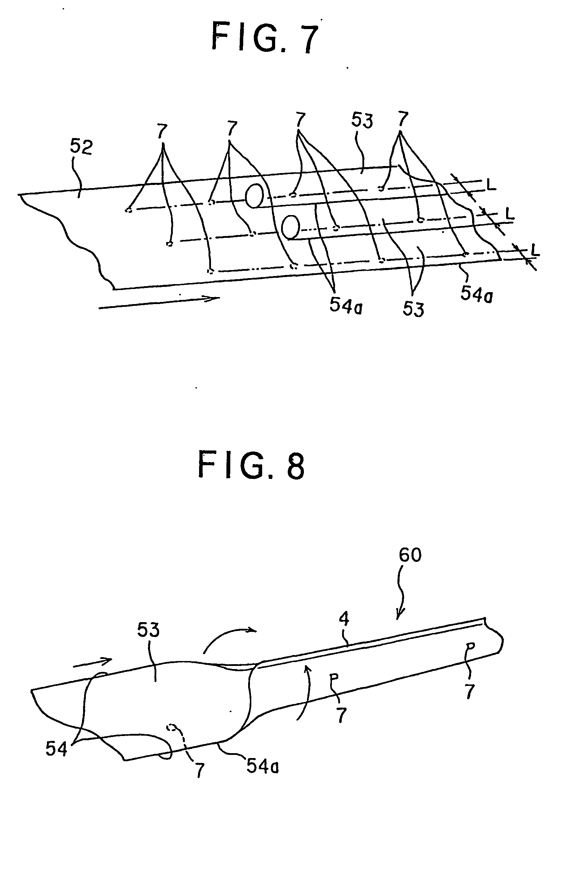

The strip-shaped plastic laminate film 52 thus formed is subjected to a slitting step to be cut into three cut strips 53 having the same width in the lateral direction of the strip-shaped plastic laminate film 52 as shown in FIG. 7. The slitting step is carried out so as to maintain a prescribed distance "L" between the rough surface portion 7 formed on the strip-shaped laminate film 52 and the respective side edge 54a of the cut strips 53 of the plastic laminate film. The position of the cut strip 53, which is away from the side edge 54a by the prescribed distance "L" corresponds to the side edge portion of the packaging bag to be manufactured. The cut strip 53 of the plastic laminate film is rounded so that the upper surface of one of the opposite side edges thereof come into contact with the upper surface of the other thereof as shown in FIG. 8. These contact portions are heat-sealed in the longitudinal direction to form the elongated tubular body 60 having the longitudinal heat sealed portion 4, which extends outwardly along the diametrical direction of the thus formed tubular body 60.

Then, the further heat-sealing steps are carried out to the tubular body 60 to form the lateral heat sealed portions 6so that the pressing force is applied vertically to the tubular body at prescribed intervals in the longitudinal direction thereof. The lateral heat sealed portions 6, which are placed in the respective forward positions relative to the rough surface portions 7 in the traveling direction of the cut strip 53, are perpendicular to the longitudinal heat sealed portion 4.

The lateral heat sealed portions 6 form the second heat sealed portions, i.e., the bottom heat sealed portions of the packaging bags. The slitting step is carried out as mentioned above, so as to maintain the prescribed distance "L" between the rough surface portion 7 formed on the strip-shaped laminate film 52 and the respective side edge 54a of the cut strips 53 of the plastic laminate film. As a result, the rough surface portions 7 are to be placed on the side edge portions of the packaging bags to be manufactured, respectively.

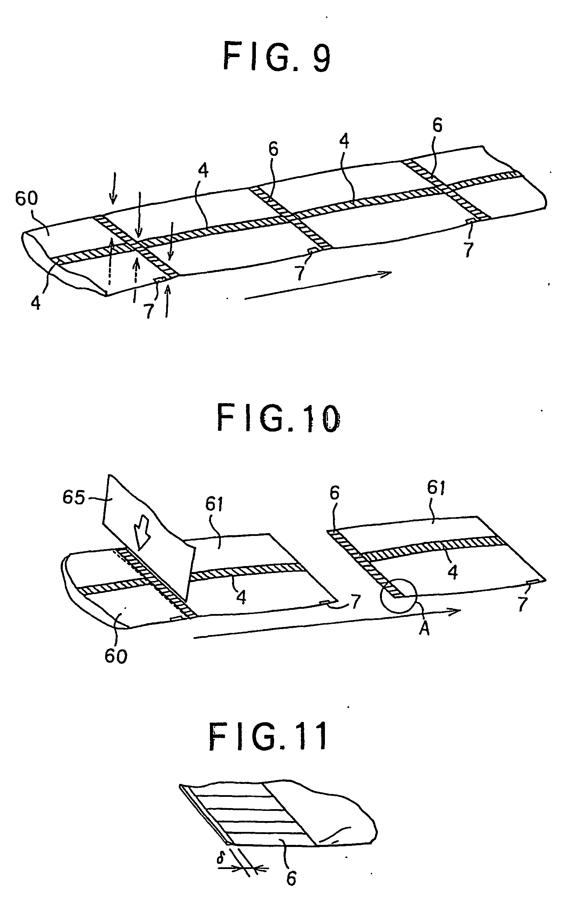

After completion of the heat-sealing step, the tubular body 60 is cut sequentially in a direction parallel to the lateral heat sealed portion 6 in the respective place between the rough surface portion 7 and the lateral heat sealed portion 6, which corresponds to the bottom heat sealed portion of the packaging bag to be manufactured, as shown in FIG. 10. FIG. 11 is an enlarged view of the portion "A" in FIG. 10, illustrating the portion as cut. The cutting step is carried out in a place, which is away from the rear end of the lateral heat sealed portion 6 by an extremely small distance δ, between the lateral heat sealed portion 6 and the rough surface portion 7. If the cutting step is carried out in a place corresponding to the lateral heat sealed portion 6, the packaging bag has on the upper side thereof the heat sealed portion, which makes it impossible to charge the packaging bag with the contents, thus providing a defective product. In view of the above-mentioned fact, there is made a strict control of the descending timing of the cutter and the traveling speed of the tubular body, so as to prevent the defective products from being manufactured.

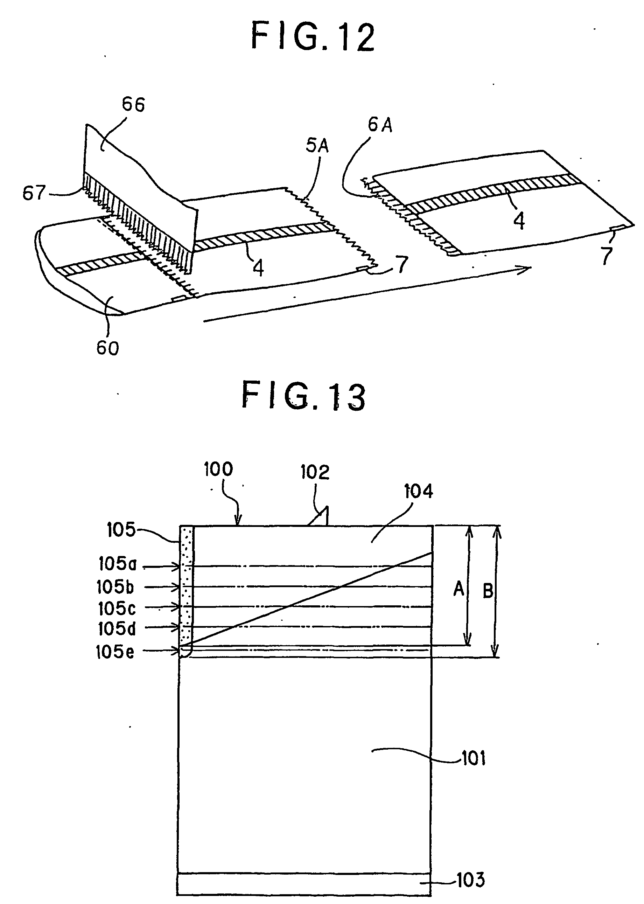

The cutter 65 used to cut the tubular body 60 has a linear cutting edge. Use of such a cutter 65 having the liner cutting edge can provide the flat edge of the cut portion without irregularities. Accordingly, each of the first and second heat sealed portions of the packaging bag has the flat edge without irregularities so as to prevent the other packaging bag from being damaged through contact of the packaging bags with each other. On the contrary, it a cutter 66 having the zigzag cutting edge 67 as shown in FIG. 12 is used to cut the tubular body 60, the zigzag shape is formed on the front cut edge 5A and the rear cut edge 6A, thus causing possibility of damaging the other packaging bag. This may lead to formation of a hole in the packaging bag to be opened unintentionally. It is possible to surely prevent the packaging bag from being pierced or torn unintentionally by providing the flat edges on the first and second heat sealed portion.

After completion of the cutting step, the packaging bags 61 with an opened upper end are obtained. Such packaging bags 61 are filled with liquid such as soy sauce or ketchup and then the upper ends of the packaging bags 61 are heat-sealed, thus manufacturing the packaging bags filled with the contents and having on their side edge portions the rough surface portions serving as the tear-starting portion.

When the upper portion of the packaging bag 1 is torn open with the use of fingers from the rough surface portion 7 serving as the tear-starting portion, which is provided on the side edge portion of the packaging bag 1, as shown in FIG. 3, the liquid such as say sauce received therein can be poured.

The method for manufacturing the packaging bags are described above utilizing the bag manufacturing apparatus. The packaging bags of the present invention may be manufactured in accordance with a method in which the packaging bags are manufactured, while they are filled with the contents based on an automatic filling system. In the above-described embodiment, the rough surface portions serving as the tear-starting portion are provided on both of the side edge portion and the rear heat sealed portion of the packaging bag. The rough surface portion may be provided only on the side edge portion of the packaging bag, or only on the rear heat sealed portion thereof. In the embodiment described above, the PE film layer is utilized to form the inner layer. An EVA (ethylene-vinyl acetate) copolymer film or an L-LDPE film may be used. Such a film may be provided in accordance with an extrusion lamination method.

Now, description will be given below of the packaging bag in which the first heat sealed portion has a width, which varies from one of the pair of opposite side edge portions toward the other thereof.

FIG. 13 shows an example of the packaging bag 100 in which the inner edge of the first heat sealed portion 104, which defines the receiving space for the contents, extends linearly and obliquely relative to the longitudinal direction. The packaging bag 100 as shown in FIG. 13 has the front face 101 and the rear face having the rear heat sealed portion 102. The packaging bag 100 is manufactured by bringing the upper surface of one of the opposite side edges of the plastic laminate film into contact with the upper surface of the other thereof and heat-sealing them by a prescribed width to form the tubular body having the rear heat sealed portion 102, and heat-sealing the upper and lower portions (i.e., the first and second opened portions) of the tubular body to form the upper and lower heat sealed portions (i.e., the first and second heat sealed portions) 104, 103, respectively.

The lower heat sealed portion (i.e., the second heat sealed portion) 103 for hermetically closing the lower opened portion has a constant width. The upper heat sealed portion (i.e., the first heat sealed portion) 104 for hermetically closing the upper opened portion has a width, decreases gradually and linearly from one of the opposite side edge portions of the bag body (i.e., the left-hand side in FIG. 13) toward the other thereof (i.e., the right-hand side in FIG. 13). As a result, the packaging bag 100 is provided with the receiving space for the contents, having a triangular shape, the top edge of which is placed on the right and upper side in FIG. 13. Such an upper heat sealed portion 104 is provided on its left-hand edge with the rough surface portion 105 serving as the tear-starting portion. The length "B" of the rough surface portion 105 is slightly longer than the maximum width "A" of the upper heat sealed portion 104 on the left-hand side thereof.

In the packaging bag 100 having the heat sealed portion 104 for hermitically closing the upper portion and the rough surface portion 105, the opening operation in an arbitrary position on the rough surface portion 105 provides an opening having the desired size, which can be varied in accordance with a user's preference. More specifically, when the packaging bag 100 is torn horizontally from the portion indicated by the reference numeral 105a or 105b, which is relatively in the vicinity of the upper edge of the packaging bag, the opening having a relatively small size is provided. When the packaging bag 100 is torn horizontally from the portion indicated by the reference numeral 105c, 105d or 105e, the opening having a relatively large size is provided. In addition, the inner edge of the first heat sealed portion 104, which defines the receiving space for the contents, extends linearly and obliquely relative to the longitudinal direction, the size of the opening can be varied in accordance with a user's preference.

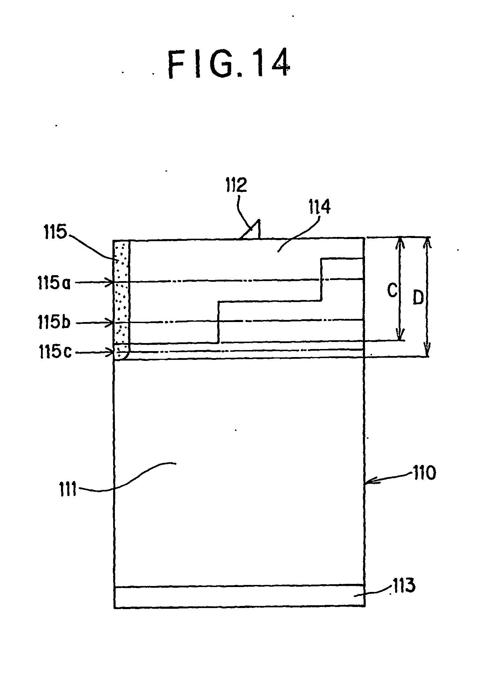

The upper heat sealed portion 114 of the packaging bag 110 may have the different shape as shown in FIG. 14. In such a packaging bag 110, the lower heat sealed portion 113 has the constant width, but the upper heat sealed portion 114 has the zigzag shape so that the vertical width of the upper heat sealed portion 114 increases stepwise from the right-hand side toward the left-hand side in FIG. 14. As a result, the receiving space for the contents has a specific shape, which is narrowed stepwise upward. The upper heat sealed portion 114 of the packaging bag as shown in FIG. 14 has the two-stepped shape. The present invention is not limited only to such an embodiment. The upper heat sealed portion 114 may have the three or more-stepped shape.

In the packaging bag 110 as shown in FIG. 14, the rough surface portion 115 vertically extends over the left-hand portion of the upper heat sealed portion 114, which has the maximum width "C". More specifically, the vertical length "D" of the rough surface portion 115 is slightly longer than the above-mentioned maximum width "C".

In the packaging bag 110 having the heat sealed portion 114 and the rough surface portion 115, there are provided three positions to be torn, i.e., (i) the position 115a corresponding to the first step serving as the uppermost step, (ii) the position 115b corresponding to the second step serving as the intermediate step and (iii) the position 115c located below the heat sealed portion 114.

FIG. 15 shows the other embodiment of the packaging bag 120 of the present invention. The packaging bag 120 is provided with a receiving space for the contents, which has a truncated isosceles triangular shape. The packaging bag 120 is manufactured by bringing the upper surface of one of the opposite side edges of the plastic laminate film into contact with the upper surface of the other thereof and heat-sealing them by a prescribed width to form the tubular body having the rear heat sealed portion 122, and heat-sealing the upper and lower portions (i.e., the first and second opened portions) of the tubular body to form the upper and lower heat sealed portions (i.e., the first and second heat sealed portions) 124, 123, respectively.

The lower heat sealed portion (i.e., the second heat sealed portion) 123 for hermetically closing the lower opened portion has a constant width. The upper heat sealed portion has a specific shape so that the receiving space for the contents has on its upper side the truncated isosceles triangular shape. As a result, the upper side of the receiving space is gradually narrowed upward. Such an upper heat sealed portion 124 is provided on the opposite side edges with the rough surface portions 125 serving as the tear-starting portion. The length "F" of each of the rough surface portions 125 is slightly longer than the maximum width "E" of the upper heat sealed portion 124.

In the packaging bag 120 having the heat sealed portion 124 for hermitically closing the upper portion and the rough surface portions 125, the opening operation in an arbitrary position on the rough surface portion 125 provides an opening having the desired size, which can be varied in accordance with a user's preference. More specifically, when the packaging bag 120 is torn horizontally from the portion indicated by the reference numeral 125a, which is relatively in the vicinity of the upper edge of the packaging bag 120, the opening having a relatively small size is provided. When the packaging bag 100 is torn horizontally from the portion indicated by the reference numeral 125b or 125c, the opening having a relatively large size is provided. As the portion to be torn descends, the size of the opening becomes larger. In addition, the inner edge of the first heat sealed portion 124, which defines the receiving space for the contents, has two straight lines extending obliquely relative to the longitudinal direction, the size of the opening can be varied in accordance with a user's preference.

The heat sealed portions are provided as in the same manner as the packaging bags 100, 110, 120 as shown in FIGS. 13 to 15. As a result, even when different kinds of liquid having the different viscosity from each other are received in the packaging bags 100, 110, 120 having the same shape, they can be torn open with an appropriate opening size, which is suitable to the viscosity of the liquid. When liquid having a relatively low viscosity such as soy sauce is received in the packaging bag, the packaging bag is torn open from the portion, which is placed relatively in the vicinity of the upper edge of the bag, to pour the liquid out. In case where the viscosity of the liquid is relatively low, a relatively small size of opening makes it possible to pour the liquid out smoothly from the packaging bags 100, 110, 120. On the contrary, when liquid having a relatively high viscosity such as ketchup or mayonnaise is received in the packaging bags 100, 110, 120, a relatively small size of opening makes it difficult to pour the liquid out smoothly therefrom. In such a case, the packaging bag are torn in a position on the rough surface portion, which is placed on the inner side, thus providing an opening having a relatively large size to pour the liquid out smoothly.

In addition, in the side edge portion of each of the packaging bags 100, 110, 120, the rough surface portion serving as the tear-starting portion extends over the edge portion of the upper heat sealed portion, which has the maximum width. As a result, the packaging bags 100, 110, 120 can be torn open from any position of the rough surface portion, thus ensuring an effect that the packaging bag can easily be torn open with fingers.

In the packaging bags 100, 110, 120 of the above-described embodiments of the present invention as shown in FIGS. 13 to 15, the rough surface portion is provided on the upper heat sealed portion 104, 114, 124. The rough surface portion may however be provided on the lower heat sealed portion or on both of the upper and lower heat sealed portions.

In the packaging bas as shown in FIGS. 13 to 15, the rough surface portions provided on the opposite surface of the rear heat sealed portions 102, 112, 122 to the tear-starting portions 105, 115, 125 in the same manner as the packaging bas as shown in FIG. 2.

According to the present invention as described in detail, an area of portions of the plastic laminate film, which are heat-sealed, can be reduced in comparison with a case where the three side-sealed bag or the four side-sealed bag is obtained with the use of the plastic laminate film having the same area. When the packaging bag is manufactured as a small packaging bas in the form of stick, it is possible to utilize effectively the plastic laminate film. In case where any aluminum foil layer is not included in the plastic laminate film, the manufacturing cost of the packaging bag can be reduced. In addition, the packaging bag can provide a good oxygen-barrier property, which is substantially equal to the packaging bag including the aluminum foil layer.

In addition, in the present invention, the heat sealed portion has a width, which varies from one of the pair of opposite side edge portions toward the other thereof, thus making it possible to tear the packaging bag open with an appropriate opening size in accordance with viscosity of the contents. The length of the tear-starting portion is slightly longer than the maximum width of the heat sealed portion. Accordingly, the packaging bag can be torn open from any position of the tear-starting portion.

Further, the upper and lower (i. e., the first and second) heat sealed portions has the flat edge without irregularities, thus preventing the other packaging bag from being damaged through contact of the packaging bags with each other.

## Claims

1. A packaging bag comprising:
a bag body made of a plastic laminate film having a pair of opposite side edges, said bag body being formed by bringing said pair of opposite side edges into contact with each other and heat-sealing them over their entirety to form a tubular shaped body having a rear heat sealed portion (102, 112, 122), and collapsing said tubular shaped body into a flatten shaped body having a front face (101, 111, 121), a rear face opposing said front face (101, 111, 121), a pair of opposite side edge portions connecting said front face (101, 111, 121) and said rear face to each other, a first opened portion and a second opened portion opposing said first opened portion, said rear heat sealed portion (102, 112, 122) being placed on said rear face; a first heat sealed portion (104, 114, 124) being formed by heat-sealing said first opened portion;
a second heat sealed portion (103, 113, 123) being formed by heat-sealing said second opened portion; and
a tear-starting portion (105, 115, 125) from which said packaging bag is to be torn open, said tear-starting portion (105, 115, 125) being provided on at least one of said pair of opposite side edge portions, said tear-starting portion (105, 115, 125) comprising a plurality of fine concavities opening outwardly
**characterized in that**:
at least one of said first heat sealed portion (104, 114, 124) and said second heat sealed portion (103, 113, 123) is provided with said tear-starting portion (105, 115, 125); and
said at least one of said first heat sealed portion (104, 114, 124) and said second heat sealed portion (103, 113. 123) has a width, which varies from one of said pair of opposite side edge portions toward an other thereof, enabling said packaging bag to be torn in an arbitrary position in said tear-starting portion (105, 115, 125) to provide an opening having a size, which varies in accordance with a tearing position in said tear-starting portion (105, 115, 125).

2. The packaging bag as claimed in Claim 1, wherein:
said width gradually decreases from said one of said pair of opposite side edge portions toward said other thereof.

3. The packaging bag as claimed in Claim 2, wherein:
said tear-starting portion (105, 115, 125) is provided on said one of said pair of opposite side edge portions so as to extend over an entirety of said width having a maximum value.

4. The packaging bag as claimed in any one of Claims 1 to 3, wherein:
said plastic laminate film comprises an oriented plastic film layer serving as an outer layer and a non-oriented plastic resin layer serving as an inner layer; and
said tear-starting portion (105, 115, 125) is formed on said oriented plastic film layer.

5. The packaging bag as claimed in Claim 4, wherein:
said oriented plastic film layer is coated at its inner side with a polyvinylidene chloride film layer.

6. The packaging bag as claimed in Claim 4, wherein;
said oriented plastic film layer is coated at its inner side with a vapor-deposited metallic layer.

7. The packaging bag as claimed in any one of Claims 1 to 3, 5 and 6, wherein:
each of said first heat sealed portion (104, 114, 124) and said second heat sealed portion (103, 113, 123) has a flat edge.

8. The packaging bag as claimed in Claim 4, wherein:
each of said first heat sealed portion (104, 114, 124) and said second heat sealed portion (103, 113, 123) has a flat edge.

## Patentansprüche

1. Einen Verpackungsbeutel, welcher umfasst:
einen Beutelkörper, welcher aus einem Kunststoff-Folienlaminat hergestellt ist, welches ein Paar von gegenüberliegenden Seitenkanten aufweist, wobei der Beutelkörper **dadurch** ausgebildet wird, dass die gegenüberliegenden Seitenkanten miteinander in Berührung gebracht und dieselben über deren Gesamtheit heiß verschweißt werden, um einen röhrenförmigen Körper auszubilden, welcher einen hinteren, heiß verschweißten Abschnitt (102, 112, 122) aufweist, und Zusammenlegen des röhrenförmigen Körpers in einen flach geformten Körper, der eine Vorderseite (101, 111, 121), eine Rückseite, welche der Vorderseite (101, 111, 121) gegenüberliegt, ein Paar von gegenüberliegenden seitlichen Kantenabschnitten, welche die Vorderseite (101, 111, 121) und die Rückseite zueinander verbinden, einen ersten geöffneten Abschnitt und einen zweiten geöffneten Abschnitt aufweist, welcher dem ersten geöffneten Abschnitt gegenüberliegt, wobei der hintere heiß verschweißte Abschnitt (102, 112, 122) auf der Rückseite angeordnet ist;
einen ersten heiß verschweißten Abschnitt (104, 114, 124), welcher durch Heißverschweißen des ersten geöffneten Abschnitts ausgebildet wird;
einen zweiten heiß verschweißten Abschnitt (103, 113, 123), welcher durch Heißverschweißen des zweiten geöffneten Abschnitts ausgebildet wird; und
einen Aufreiß-Anfangsabschnitt (105, 115, 125) von welchem aus der Verpackungsbeutel aufgerissen werden soll, wobei der Aufreiß-Anfangsabschnitt (105, 115, 125) auf mindestens einem Kantenabschnitt des Paars von gegenüberliegenden seitlichen Kantenabschnitten bereitgestellt wird, wobei der Aufreiß-Anfangsabschnitt (105, 115, 125) eine Vielzahl von sich nach außen öffnenden, feinen Vertiefungen umfasst
**dadurch gekennzeichnet, dass**:
mindestens einer von dem ersten heiß verschweißte Abschnitt (104, 114, 124) und dem zweiten heiß verschweißte Abschnitt (103, 113, 123) mit dem Aufreiß-Anfangsabschnitt (105, 115, 125) ausgestattet ist; und
der mindestens eine von dem ersten heiß verschweißte Abschnitt (104, 114, 124) und dem zweiten heiß verschweißte Abschnitt (103, 113, 123) eine Breite aufweist, welche sich von einem von dem Paar von gegenüberliegenden seitlichen Kantenabschnitten zu dem anderen derselben ändert, wodurch ermöglicht wird, dass der Verpackungsbeutel in einer beliebigen Stelle in dem Abreiß-Anfangsabschnitt (105, 115, 125) aufgerissen werden soll, um eine Öffnung bereitzustellen, welche eine Größe aufweist, welche sich entsprechend einer Aufreißstelle in dem Aufreiß-Anfangsabschnitt (105, 115, 125) ändert.

2. Der Verpackungsbeutel gemäß Anspruch 1, wobei die Breite von dem einen von dem Paar von gegenüberliegenden seitlichen Kantenabschnitten zu dem anderen derselben allmählich abnimmt.

3. Der Verpackungsbeutel gemäß Anspruch 2, wobei der Aufreiß-Anfangsabschnitt (105, 115, 125) auf dem einen von dem Paar von gegenüberliegenden Seitenkantenabschnitten bereitgestellt wird, so dass sich derselbe über die Gesamtheit der Breite, welche einen maximalen Wert aufweist, erstreckt.

4. Der Verpackungsbeutel gemäß Anspruch 1 bis 3, wobei der Kunststoff-Folienlaminat eine ausgerichtete Kunststoff-Folienschicht, welche als eine äußere Schicht dient und eine nicht ausgerichtete Kunststoffharzschicht umfasst, welche als eine innere Schicht dient; und der Aufreiß-Anfangsabschnitt (105, 115, 125) auf der ausgerichteten Kunststoff-Folienschicht ausgebildet ist.

5. Der Verpackungsbeutel gemäß Anspruch 4, wobei die ausgerichtete Kunststoff-Folienschicht auf ihrer Innenseite mit einer Polyvinylidenchlorid Folienschicht beschichtet ist.

6. Der Verpackungsbeutel gemäß Anspruch 4, wobei die ausgerichtete Kunststoff-Folienschicht auf ihrer Innenseite mit einer aufgedampften metallischen Schicht beschichtet ist.

7. Der Verpackungsbeutel gemäß einem der Ansprüche 1 bis 3, 5 und 6, wobei sowohl der erste heiß verschweißte Abschnitt (104, 114, 124) als auch der zweite heiß verschweißte Abschnitt (103, 113, 123) eine glatte Kante aufweisen.

8. Der Verpackungsbeutel gemäß Anspruch 4, wobei sowohl der erste heiß verschweißte Abschnitt (104, 114, 124) als auch der zweite heiß verschweißte Abschnitt (103, 113, 123) eine glatte Kante aufweisen.

## Revendications

1. Sac d'emballage comprenant :
un corps de sac fabriqué à partir d'une pellicule de matière plastique stratifiée comprenant une paire de bords latéraux en opposition, ledit corps de sac étant formé en amenant en contact l'un avec l'autre ladite paire de bords latéraux en opposition et en les soudant par thermosoudage sur leur totalité afin de former un corps de forme tubulaire comprenant une partie arrière thermosoudée (102, 112, 122), et en aplatissant ledit corps de forme tubulaire en un corps à forme aplatie comprenant une face avant (101, 111, 121), une face arrière en opposition à ladite face avant (101, 111, 121), une paire de parties de bords latéraux en opposition en connexion avec l'une et l'autre de.ladite face avant (101, 111, 12 1) et de la face arrière, une première partie ouverte et une seconde partie ouverte étant en opposition à ladite première partie ouverte, ladite partie arrière thermosoudée (102, 112, 122) étant disposée sur ladite face arrière ;
une première partie therm osoudée (104, 114, 124) étant formée par thermosoudage de ladite première partie ouverte ;
une seconde partie thermosoudée (103, 113, 123) étant formée par thermosoudage de ladite seconde partie ouverte ; et
une partie de commencement de déchirement (10 5, 115, 125) à partir de laquelle ledit sac d'emballage doit être déchiré pour s'ouvrir, ladite partie de commencement de déchirement (105, 115, 125) étant aménagée sur au moins une partie de ladite paire de parties de bords opposés, ladite partie de commencement de déchirement (105, 115, 125) comprenant une pluralité de fines concavités s'ouvrant vers l'extérieur,
**caractérisé en ce que** :
au moins l'une de ladite première partie thermosoudée (104, 114, 124) et de ladite seconde partie thermosoudée (103, 11 3, 123) comporte ladite partie de commencement de déchirement (105, 115, 125) ; et
ladite au moins une de ladite première partie thermosoudée (104, 114, 124) et de ladite seconde partie thermosoudée (103, 113, 123) a une largeur, qui est modifiée à partir d'une partie de bord de ladite paire de bords latéraux opposés vers une autre extrémité de ceux -ci, ce qui permet audit sac d'emballage de se déchirer dans une position arbitraire dans ladite partie de commencement de déchirement (105, 115, 125) afin de fournir une ouverture ayant une dimension qui peut être modifiée en fonction d'une position de déchirement de ladite partie de commencement de déchirement (105, 115, 125).

2. Sac d'emballage selon la revendication 1, dans lequel :
ladite largeur se réduit progressivement à partir d'un bord de ladite paire de parties de bords latéraux en opposition vers ledit autre bord de celle-ci.

3. Sac d'emballage selon la revendication 2, dans lequel :
ladite partie de commencement de déchirement (105, 115, 125) est aménagée sur un bord de ladite paire de parties de bords latéraux opposés de manière à s'étendre sur la totalité de ladite largeur qui a une valeur maximale.

4. Sac d'emballage selon l'une quelconque des revendications 1 à 3, dans lequel :
ladite pellicule en matière plastique stratifiée comprend une couche de matière plastique orientée qui sert de couche externe et une couche de résine plastique non orientée qui sert de couche interne ; et ladite partie de commencement de déchirement (105, 115, 125) est formée sur ladite couche de matière plastique orientée.

5. Sac d'emballage selon la revendication 4, dans lequel :
ladite couche de pellicule en matière plastique orientée est revêtue sur son côté interne d'une couche de pellicule en chlorure de polyvinylidène.

6. Sac d'emballage selon la revendication 4, dans lequel :
ladite couche de matière plastique orientée est revêtue sur son côté interne d'une couche métallique aménagée par condensation de vapeur.

7. Sac d'emballage selon l'une quelconque des revendications 1 à 3, 5 et 6, dans lequel :
chacune de ladite première partie thermosoudée (104, 114, 124) et de ladite seconde partie thermosoudée (103, 113, 123) comprend un bord plat.

8. Sac d'emballage selon la revendication 4, dans lequel :
chacune d e ladite première partie thermosoudée (104, 114, 124) et de ladite seconde partie thermosoudée (103, 113, 123) comprend un bord plat.
